(19) Europäisches Patentamt
European Patent Office
Office européen des brevets

(11) **EP 3 379 291 A1**

(12) **EUROPEAN PATENT APPLICATION**
published in accordance with Art. 153(4) EPC

(43) Date of publication:
26.09.2018 Bulletin 2018/39

(51) Int Cl.:
*G01S 17/10* (2006.01)          *G01S 7/487* (2006.01)
*G01S 17/89* (2006.01)

(21) Application number: 16865920.9

(22) Date of filing: 09.11.2016

(86) International application number:
PCT/JP2016/004837

(87) International publication number:
WO 2017/085916 (26.05.2017 Gazette 2017/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 16.11.2015 US 201562255645 P

(71) Applicant: Panasonic Intellectual Property
Management Co., Ltd.
Osaka-shi, Osaka 540-6207 (JP)

(72) Inventors:
• TAKANO, Haruka
Osaka-shi, Osaka 540-6207 (JP)
• KANEMITSU, Tomohiko
Osaka-shi, Osaka 540-6207 (JP)
• HASUKA, Tsuyoshi
Osaka-shi, Osaka 540-6207 (JP)
• OTANI, Mitsuhiko
Osaka-shi, Osaka 540-6207 (JP)

(74) Representative: Vigand, Philippe et al
Novagraaf International SA
Chemin de l'Echo 3
1213 Onex - Genève (CH)

(54) **IMAGING DEVICE AND SOLID-STATE IMAGING ELEMENT USED IN SAME**

(57) An imaging device (10) includes: a controller (3) which generates a light emission signal and an exposure signal; a light source unit (1) which receives the light emission signal and emits light; a light receiver (2) which obtains the exposure amount of reflected light at a timing in accordance with the exposure signal; and a calculator (4) which outputs a distance signal (distance image) by calculation on the basis of the amount of signals included in imaging signals received from the light receiver (2). The controller (3) generates two or more patterns of varying phase relationships between the light emission signal and the exposure signal, and outputs the light emission signal and the exposure signal in a cycle that is different between at least two of the patterns.

FIG. 1

**Description**

TECHNICAL FIELD

The present invention relates to an imaging device and a solid-state imaging element used in the imaging device.

BACKGROUND ART

Among methods for sensing an object or measuring a distance, the time-of-flight (TOF) method is known in which a distance is measured using flight time that light takes to travel to and return from a measurement object.
Patent Literature (PTL) 1 discloses de-aliasing for disambiguating time of round-trip of detected light during repeated light emission and exposure without degradation in distance measurement accuracy by using different modulation frequencies in the phase-type TOF method. Specifically, PTL 1 discloses a conventional technique for removing what is called aliasing in distance measurement by outputting a value of measured distance to an object for which the time of flight of reflected light (a delay dependent on an optical path) exceeds one cycle of the modulation frequency as a value of measured distance defined by the time of flight within one cycle of the modulation frequency.

Citation List

Patent Literature

PTL 1:
PTL 1: Unexamined Patent Application Publication (Translation of PCT Application) No. 2013-538342

SUMMARY OF THE INVENTION

TECHNICAL PROBLEM

In the conventional technique disclosed in PTL 1, however, a low modulation frequency needs to be not greater than a half of a high modulation frequency in order to effectively realize de-aliasing. Accordingly, the above-mentioned conventional technique is problematic in that the frame rate is limited by low modulation frequencies and thus, speeding up is not possible.
In view of the above problem, an object of the present invention is to provide an imaging device which achieves high distance measurement accuracy and removal of what is called aliasing in distance measurement without lowering the frame rate.

SOLUTIONS TO PROBLEM

In order to solve the aforementioned problem, an imaging device according to an aspect of the present invention is an imaging device which measures a distance to a subject by emitting light and receiving reflected light of the light emitted and includes: a light source unit configured to emit the light at a timing of a light emission signal instructing emission of the light; a light receiver which performs exposure at a plurality of different timings according to an exposure signal instructing exposure to the reflected light from the subject, and outputs a plurality of imaging signals; a calculator which receives the plurality of imaging signals and calculates the distance; and a controller which generates two or more patterns of varying phase relationships between the light emission signal and the exposure signal, and outputs the light emission signal and the exposure signal in a cycle that is different between at least two of the two or more patterns.
Furthermore, the controller may determine the cycle in each of the two or more patterns to output the light emission signal and the exposure signal in a cycle in which a phase relationship between the light emission signal and the exposure signal generated next to the exposure signal corresponding to the light emission signal in each of the two or more patterns is the same.
Furthermore, the controller may output the light emission signal and the exposure signal in the cycle that is arbitrary.
Furthermore, the controller may establish a period during which at least the light emission signal that is otherwise periodically generated is not generated.
Furthermore, the controller may establish a period during which at least the light emission signal that is otherwise periodically generated is not generated to make an average cycle in each of the two or more patterns the same.
Furthermore, the controller may establish a period during which the light emission signal that is otherwise periodically generated and the exposure signal corresponding to the light emission signal that is otherwise periodically generated are not generated.

Furthermore, the controller may establish a period during which the light emission signal that is otherwise periodically generated and the exposure signal corresponding to the light emission signal that is otherwise periodically generated are not generated to make an average cycle in each of the two or more patterns the same.

Furthermore, the light receiver may include: a solid-state imaging element which includes: a plurality of pixels; and a plurality of signal accumulators respectively associated with the plurality of pixels, and accumulates signals in the plurality of signal accumulators, and in the solid-state imaging element, each of the plurality of signal accumulators that accumulate signals detected by the same pixel may accumulate the signals resulting from exposure performed in an exposure period of which a timing of the exposure signal instructing the exposure to the reflected light from the subject is different from a timing of the light emission signal.

Furthermore, the controller may cause each of the plurality of signal accumulators that accumulate the signals detected by the same pixel of the light receiver to accumulate the signals through a plurality of light emissions and corresponding exposure, and may differentiate a repetition cycle of the light emission signal and a repetition cycle of the exposure signal of which a timing for instructing the exposure to the reflected light from the subject is different from the timing of the light emission signal.

Furthermore, the solid-state imaging element may be a charge coupled device (CCD) solid-state imaging element.

Furthermore, the imaging device may measure the distance to the subject using a time-of-flight (TOF) method.

Furthermore, a solid-state imaging element according to an aspect of the present invention is a solid-state imaging element used in an imaging device which includes: a light source unit which emits light at a timing of a light emission signal instructing emission of the light; a light receiver including the solid-state imaging element; and a calculator which receives an imaging signal from the light receiver, and calculates a distance, the imaging device measures a distance to a subject by generating two or more patterns of varying phase relationships between the light emission signal and an exposure signal, further generating the light emission signal and the exposure signal in a cycle that is different between at least two of the two or more patterns, emitting the light, and receiving reflected light of the light emitted, and the solid-state imaging element performs exposure at a plurality of different timings according to the exposure signal instructing exposure to the reflected light from the subject, and outputs a plurality of the imaging signals.

ADVANTAGEOUS EFFECT OF INVENTION

With the imaging device according to the present invention, it is possible to achieve high distance measurement accuracy and removal of aliasing in distance measurement without lowering the frame rate.

BRIEF DESCRIPTION OF DRAWINGS

FIG. 1 is a function block diagram illustrating an outline configuration of an imaging device according to Embodiment 1.
FIG. 2 is a function block diagram illustrating a configuration of a controller according to Embodiment 1.
FIG. 3 is a schematic configuration view illustrating functions of a solid-state imaging element according to Embodiment 1.
FIG. 4 illustrates an example of the timing for detecting the exposure amount of an imaging device according to Embodiment 1.
FIG. 5 illustrates an example of the timing for detecting the exposure amount of an imaging device according to Embodiment 1.
FIG. 6 illustrates, in (a), the sequence of signal processing in a typical imaging device, and in (b), the sequence of signal processing in an imaging device according to Embodiment 1.
FIG. 7 illustrates an example of the timings for a light emission signal and an exposure signal and the exposure amount of an imaging device according to Embodiment 1.
FIG. 8 illustrates the sequence of signal processing in an imaging device according to Variation 1 of Embodiment 1.
FIG. 9 illustrates an example of the timings for a light emission signal and an exposure signal and the exposure amount of an imaging device according to Variation 1 of Embodiment 1.
FIG. 10 illustrates the sequence of signal processing in an imaging device according to Variation 2 of Embodiment 1.
FIG. 11 illustrates an example of the timings for a light emission signal and an exposure signal and the exposure amount of an imaging device according to Embodiment 2.
FIG. 12 illustrates the sequence of signal processing in an imaging device according to Variation 1 of Embodiment 2.
FIG. 13 illustrates an example of the timings for a light emission signal and an exposure signal and the exposure amount of an imaging device according to Variation 2 of Embodiment 2.

DESCRIPTION OF EXEMPLARY EMBODIMENTS

Hereinafter, an imaging device and a solid-state imaging element used in the imaging device according to embodiments of the present disclosure will be described with reference to the drawings. Note that each of the following embodiments shows one specific example of the present disclosure; the numerical values, shapes, materials, structural elements, the arrangement and connection of the structural elements, etc., shown in the following embodiments are mere examples, and are not intended to limit the present disclosure.

There are instances where overly detailed description is omitted. For example, detailed description of well-known matter, redundant description of substantially identical structural elements, etc., may be omitted. This is to prevent the subsequent description from becoming unnecessarily redundant, and thus facilitate understanding by a person having ordinary skill in the art.

EMBODIMENT 1

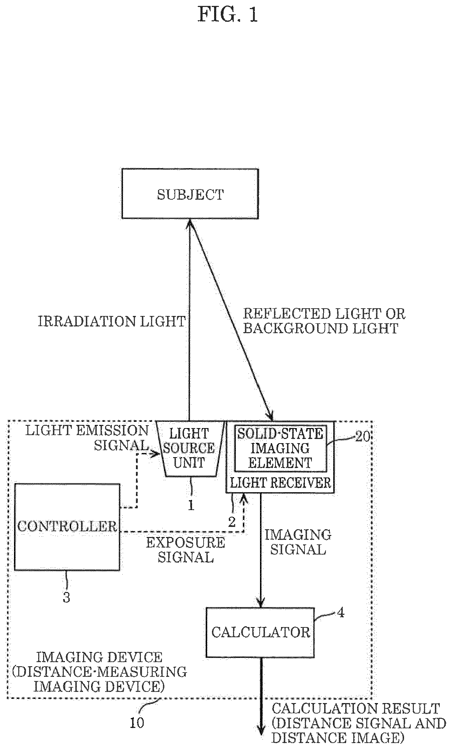

FIG. 1 is a function block diagram illustrating an example of an outline configuration of imaging device 10 according to Embodiment 1. As illustrated in this figure, imaging device 10 includes light source unit 1, light receiver 2, controller (drive controller) 3, and calculator 4. With this configuration, imaging device 10 is capable of capturing not only still images, but also moving images.

Light source unit 11 includes a drive circuit, a capacitor, and a light-emitting element, and emits irradiation light by supplying a charge held in the capacitor to a light-emitting diode. The light-emitting element may be a laser diode (LD), a light-emitting diode (LED), or the like. The irradiation light is, as an example, infrared light (including near-infrared light and far-infrared light).

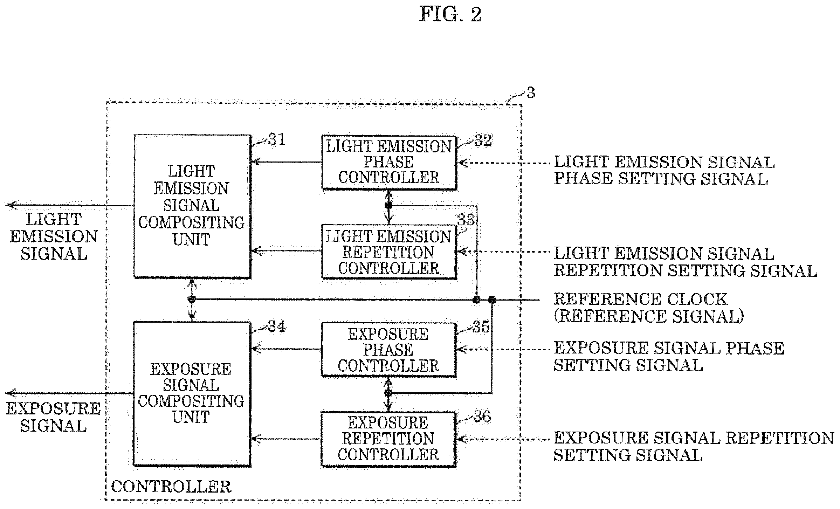

FIG. 2 is a function block diagram illustrating a configuration of controller 3 according to Embodiment 1. As illustrated in this figure, controller 3 includes: light emission phase controller 32 which instructs a rising edge phase and a falling edge phase of a light emission signal; light emission repetition controller 33 which instructs the number of repetitions and the cycle of the light emission signal; and light emission signal compositing unit 31 which combines and outputs the light emission signal in accordance with the rising edge phase and the falling edge phase instructed by light emission phase controller 32 and the number of repetitions and the cycle instructed by light emission repetition controller 33.

Furthermore, controller 3 includes: exposure phase controller 35 which instructs a rising edge phase and a falling edge phase of an exposure signal; exposure repetition controller 36 which instructs the number of repetitions and the cycle of the exposure signal; and exposure signal compositing unit 34 which combines and outputs the exposure signal in accordance with the number of repetitions and the cycle instructed by exposure repetition controller 36.

With this configuration, controller 3 can independently determine the phase and the repetition cycle of each of the light emission signal and the exposure signal and can generate a plurality of patterns of varying phase relationships between the light emission signal and the exposure signal. Furthermore, the light emission signal and the exposure signal can be output in such a way that the repetition cycle is different between the patterns of varying phase relationships between the light emission signal and the exposure signal. Note that the repetition cycle instructed by light emission repetition controller 33 and exposure repetition controller 36 may be fixed or periodic or may change regularly or randomly.

Stated differently, controller 3 generates a light emission signal instructing light emission to a subject and an exposure signal instructing exposure to light reflected from the subject. More specifically, controller 3 according to the present embodiment causes each of a plurality of signal accumulators in which signals detected by the same pixel of light receiver 2 are accumulated to accumulate the signals through plural light emissions and corresponding exposure. Furthermore, controller 3 differentiates the repetition cycle of the light emission signal and the repetition cycle of the exposure signal of which the timing for instructing the exposure to the light reflected from the subject is different from the timing of the light emission signal.

Note that controller 3 may include separate controllers which generate the light emission signal and the exposure signal. For example, controller 3 includes an arithmetic processing unit such as a microcomputer. The microcomputer includes a processor (microprocessor) and memory and outputs a light emission control signal and an exposure control signal by the processor executing a drive program stored in the memory. Note that controller 3 may use a field-programmable gate array (FPGA), an Internet service provider (ISP), and the like, and may include one hardware or may include more than one hardware.

As illustrated in FIG. 2, in controller 3, the above-described light emission signal compositing unit 31, light emission phase controller 32, light emission repetition controller 33, exposure signal compositing unit 34, exposure phase controller 35, and exposure repetition controller 36 are more preferably controlled by a reference signal (reference clock) received from the outside of controller 3. Furthermore, it is more preferable that light emission phase controller 32 be controlled by a signal (light emission signal phase setting signal) received from the outside of controller 3, light emission repetition controller 33 be controlled by a signal (light emission signal repetition setting signal) received from the outside of controller 3, exposure phase controller 35 be controlled by a signal (exposure signal phase setting signal) received from the outside of controller 3, and exposure repetition controller 36 be controlled by a signal (exposure signal repetition setting signal) received from the outside of controller 3.

Light source unit 1 blinks (emits pulsed light) according to the timing of the light emission signal generated by controller 3 and emits irradiation light (pulsed light) to the subject.

Light receiver 2 includes solid-state imaging element 20. Solid-state imaging element 20 receives reflected light (pulsed light) resulting from reflection of the irradiation light and background light (ambient light) such as sunlight.

Furthermore, solid-state imaging element 20 performs, for an area including the subject, exposure a plurality of times according to the timing indicated by the exposure signal generated by controller 3, includes a plurality of signal accumulators associated with respective pixels, and accumulates signals (accumulation signals) in the plurality of signal accumulators upon capturing an image, thereafter transfers the accumulated signals (accumulation signals), and outputs imaging signals corresponding the exposure amount. More specifically, in solid-state imaging element 20 according to the present embodiment, each of the plurality of signal accumulators that accumulate the signals detected by the same pixel accumulates signals resulting from exposure performed in an exposure period corresponding to the exposure signal having a timing different from the timing of the light emission signal.

Light receiver 2 further includes: a camera lens; an optical band-pass filter (BPF) which passes only light having a wavelength close to the wavelength of light irradiated by light source unit 1; and a circuit such as an A/D converter, as appropriate.

Calculator 4 outputs a distance signal (distance image) which is information of the distance to the subject obtained by calculation on the basis of the amounts of signals included in the imaging signal and a second imaging signal which have been received from light receiver 2.

The following describes the case where a charge coupled device (CCD) solid-state imaging element is used as solid-state imaging element 20 used in imaging device 10 according to the present embodiment.

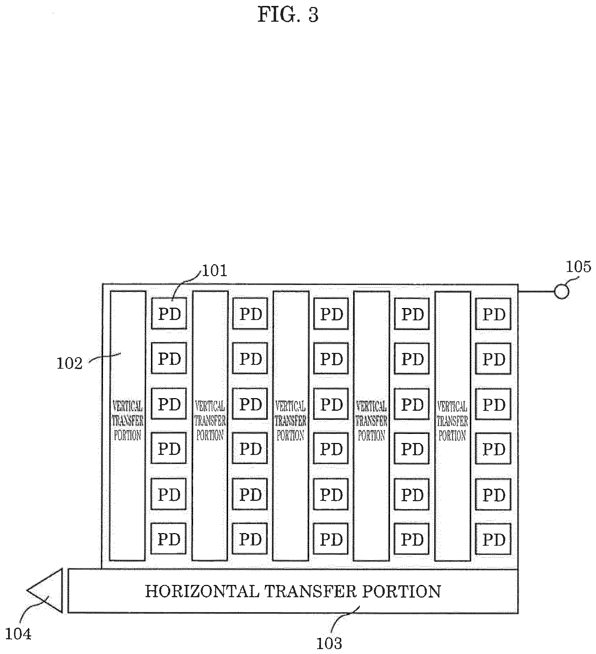

FIG. 3 is a schematic configuration view illustrating functions of CCD solid-state imaging element 20. This figure is a schematic configuration view illustrating an example of solid-state imaging element 20 according to the present embodiment; light receiver 2 includes this solid-state imaging element 20. Herein, only the part encompassing six pixels in the vertical direction and five pixels in the horizontal direction is illustrated to facilitate understanding of the present invention.

As illustrated in this figure, solid-state imaging element 20 according to the present embodiment includes: photodiode (PD; a light-receiving element) 101; vertical transfer portion 102; horizontal transfer portion 103; signal charge detector 104; and semiconductor substrate voltage (SUB) terminal 105 which inputs signal φSUB for controlling SUB.

Photodiode 101 converts received light into a charge. Vertical transfer portion 102 includes a plurality of gates, and transfers charges read from photodiodes 101 sequentially in the vertical direction. Some of the plurality of gates are readout gates that read the charges from photodiodes 101.

Horizontal transfer portion 103 includes a plurality of gates, and transfers charges received from vertical transfer portions 102 by the plurality of gates as packets, sequentially in the horizontal direction. Signal charge detector 104 sequentially detects the charges received from the horizontal transfer portion, converts each charge into a voltage signal, and outputs the voltage signal.

Here, in the state where the readout gates are open, a substrate voltage (SUB) is controlled according to an exposure signal, and photodiode 101 is exposed to light in a period during which the exposure signal is Low. A charge generated by this exposure is accumulated in vertical transfer portion 102.

In other words, the exposure signal output from controller 3 and instructing an exposure timing is input to SUB terminal 105 and used to control the semiconductor substrate voltage (SUB).

In FIG. 3, the use of a CCD image sensor (CCD solid-state imaging element) enables a global reset, i.e. an operation of resetting the plurality of photodiodes 101 at once. More accurate distance measurement can be achieved in this way. The solid-state imaging element used in the present embodiment is, however, not limited to a CCD image sensor. The same advantageous effects (e.g. realizing removal of what is called aliasing in distance measurement at high speed with high accuracy) can be achieved even when any other solid-state imaging element (image sensor) such as a CMOS image sensor (CMOS solid-state imaging element) or an image sensor including a photoelectric conversion film is used for an imaging device in view of other requirements.

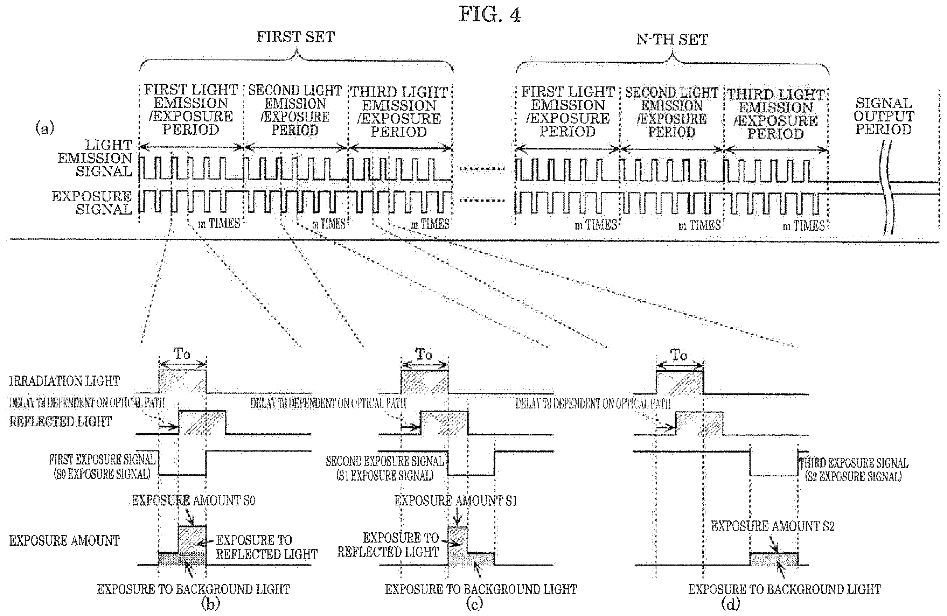

Next, a method for driving imaging device 10 (operation timing) according to the present embodiment will be described with reference to FIG. 4 to FIG. 7. Note that as described later with reference to FIG. 4 to FIG. 7, imaging device 10 according to the present embodiment uses the TOF method as a method for obtaining a distance signal, and adopts, as a basic principle, the rectangular-wave TOF method (pulse TOF method) in which repetition of light emission and exposure includes a phase in which no exposure is performed.

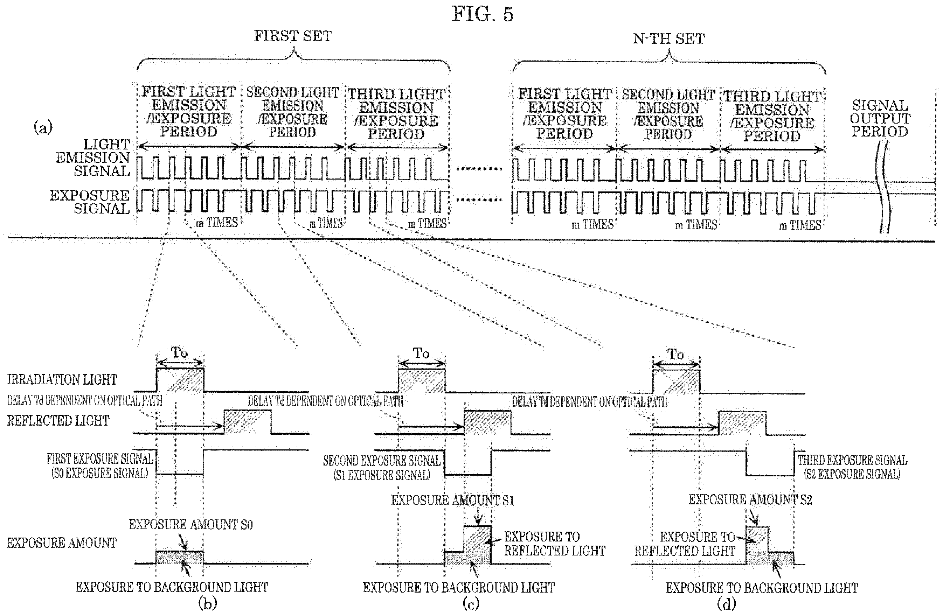

FIG. 4 and FIG. 5 each illustrate an example of the timing for detecting the exposure amount of imaging device 10 according to Embodiment 1. In the example according to the present embodiment, there are three different signal accumulators in which signals (accumulation signals) detected by the same pixel included in solid-state imaging element 20 are accumulated.

Note that (a) in FIG. 4 and (a) in FIG. 5 each illustrate a schematic example of the timing relationship in one screen in which controller 3 outputs the light emission signal and the exposure signal. In addition, (b) in FIG. 4 and (b) in FIG. 5 each represent the timing for detecting exposure amount S0 in the first light emission/exposure period, (c) in FIG. 4 and (c) in FIG. 5 each represent the timing for detecting exposure amount S1 in the second light emission/exposure period, and (d) in FIG. 4 and (d) in FIG. 5 each represent the timing for detecting exposure amount S2 in the third light emission/exposure period.

First, as illustrated in (a) and (b) in FIG. 4 and (a) and (b) in FIG. 5, in the first light emission/exposure period, photodiode 101 is exposed to light in a period during which a first exposure signal is Low, and a charge generated by the exposure is accumulated in vertical transfer portion 102. This operation is repeated m times in the present embodiment. When the first light emission/exposure period ends, the gates of vertical transfer portion 102 are controlled to transfer the charge to a packet with no readout gate.

The first light emission/exposure period is a period in which light receiver 2 receives the exposure signal and performs exposure after a first delay time with respect to the timing at which light source unit 1 receives the light emission signal and emits light. In the present embodiment, the length of the first exposure signal period is set to To which is the same as the length of the light emission signal period, and the first delay time is set to 0. Thus, the first exposure signal period is set to a period during which the light emission signal is transmitted (high level).

Next, as illustrated in (a) and (c) in FIG. 4 and (a) and (c) in FIG. 5, in the second light emission/exposure period, photodiode 101 is exposed to light in a period during which a second exposure signal is Low, and a charge generated by the exposure is accumulated in vertical transfer portion 102. This operation is repeated m times in the present embodiment. When the second light emission/exposure period ends, the gates of vertical transfer portion 102 are controlled to transfer the charge to a packet with no readout gate.

The second light emission/exposure period is a period in which light receiver 2 receives the exposure signal and performs exposure after a second delay time different from the first delay time with respect to the timing for receiving the light emission signal. In the present embodiment, the length of the second exposure signal period is set to To which is the same as the length of the light emission signal period and the length of the first exposure signal period, and the second delay time is set to To which is the sum of first delay time 0 and the first exposure signal period.

Next, as illustrated in (a) and (d) in FIG. 4 and (a) and (d) in FIG. 5, in the third light emission/exposure period, photodiode 101 is exposed to light in a period during which a third exposure signal is Low, and a charge generated by the exposure is accumulated in vertical transfer portion 102. This operation is repeated m times in the present embodiment. When the third light emission/exposure period ends, the gates of vertical transfer portion 102 are controlled to perform transfer so that the charge resulting from the exposure according to the first exposure signal is situated in a packet with a readout gate.

The third light emission/exposure period is a period in which light receiver 2 receives the exposure signal and performs exposure after a third delay time different from the first and second delay times with respect to the timing for receiving the light emission signal. In the present embodiment, the length of the third exposure signal period is set to To which is the same as the length of the light emission signal period and the length of each of the first and second exposure signal periods, and the third delay time is set to $2 \times$ To which is the sum of first delay time 0, first exposure signal period To, and second exposure period To.

This series of operations is repeatedly performed N times in the present embodiment. After this, the transfer of vertical transfer portion 102 and the transfer of horizontal transfer portion 103 are repeatedly performed sequentially, and the charge is converted into a voltage signal in signal charge detector 104 and output.

In this way, a plurality of packets already provided in vertical transfer portion 102 can be used as signal accumulators which accumulate signals (accumulation signals) obtained in a plurality of exposure periods that differ in the timing of the exposure signal for receiving reflected light from a subject with respect to the light emission signal. This makes it unnecessary to newly form signal accumulators. Photodiode 101 can be made larger with the same area, with it being possible to increase saturation sensitivity and increase the maximum light reception amount. Highly accurate distance measurement can thus be achieved.

The distance measuring operation by imaging device 10 according to the present embodiment will be described below in detail with reference to FIG. 4 and FIG. 5.

First, controller 3 outputs the first exposure signal in the first light emission/exposure period, the second exposure signal in the second light emission/exposure period, and the third exposure signal in the third light emission/exposure period that differ in the timing at which light receiver 2 receives reflected light from a subject with respect to the light emission signal. In the present embodiment, the length of each of the first, second, and third exposure signal periods is set to To which is the same as the length of the light emission signal period, and the delay time of the first exposure signal with respect to the timing at which light source unit 1 receives the light emission signal and emits light is set to 0. Thus, the first exposure signal period is set to a period during which the light emission signal is transmitted (high level). The delay time of the second exposure signal is set to To which is the sum of first delay time 0 and first exposure signal period To. The delay time of the third exposure signal is set to 2 × To which is the sum of second delay time To and second exposure period To. Accordingly, the exposure amount of background light is equal in the first, second, and third exposure signal periods.

Meanwhile, (a) in FIG. 4 and (a) in FIG. 5 each illustrate an example of the timing relationship of the light emission signal and the first, second, and third exposure signals in one screen. In the present embodiment, the number of repetitions of the light emission signal and the exposure signal in each of the first, second, and third light emission/exposure periods is m, with this series of timings being regarded as one set. This set is repeatedly output N times, and then the accumulated exposure signals are output. Let S0 be the total sum of exposure amounts s0 according to the first exposure signal, S1 be the total sum of exposure amounts s1 according to the second exposure signal, and S2 be the total sum of exposure amounts s2 according to the third exposure signal.

FIG. 4 illustrates the case where delay Td dependent on the optical path of reflected light from a subject with respect to the light emission signal timing (irradiation light) is less than the sum of first delay time 0 and first exposure signal period To (i.e. To). In this case, exposure is performed so as to include all reflected light from the subject in the period which is the sum of the first exposure signal period and the second exposure signal period. The exposure amount in the second exposure signal period is greater when delay Td of the reflected light from the subject with respect to the light emission signal timing is greater. In the third exposure signal period, exposure to only background light is performed.

In this case, calculator 4 compares total exposure amount S0 according to the first exposure signal and total exposure amount S2 according to the third exposure signal, and determines as indicated in the following Expression 1.
[Math. 1]

$$S0 > S2 \qquad (\text{Expression 1})$$

Let c be the speed of light (299,792,458 m/s). On the basis of the determination result of Expression 1, calculator 4 can calculate distance L according to the following Expression 2.
[Math. 2]

$$L = \frac{c \times To}{2} \times \frac{S1 - S2}{S0 - S2 + S1 - S2} \qquad (\text{Expression 2})$$

FIG. 5 illustrates the case where delay Td dependent on the optical path of reflected light from a subject with respect to the light emission signal timing (irradiation light) is greater than or equal to the sum of first delay time 0 and first exposure signal period To (i.e. To). In this case, exposure is performed so as to include all reflected light from the subject in the period which is the sum of the second exposure signal period and the third exposure signal period. The exposure amount in the third exposure signal period is greater when delay Td of the reflected light from the subject with respect to the light emission signal timing is greater. In the first exposure signal period, exposure to only background light is performed.

In this case, calculator 4 compares total exposure amount S0 according to the first exposure signal and total exposure amount S2 according to the third exposure signal, and determines as indicated in the following Expression 3.
[Math. 3]

$$S2 \geqq S0 \qquad (\text{Expression 3})$$

On the basis of the determination result of Expression 3, calculator 4 can calculate distance L according to the following Expression 4.
[Math. 4]

$$L = \frac{c \times To}{2} \times \frac{S2 - S0}{S1 - S0 + S2 - S0} + \frac{c \times To}{2} \qquad (\text{Expression 4})$$

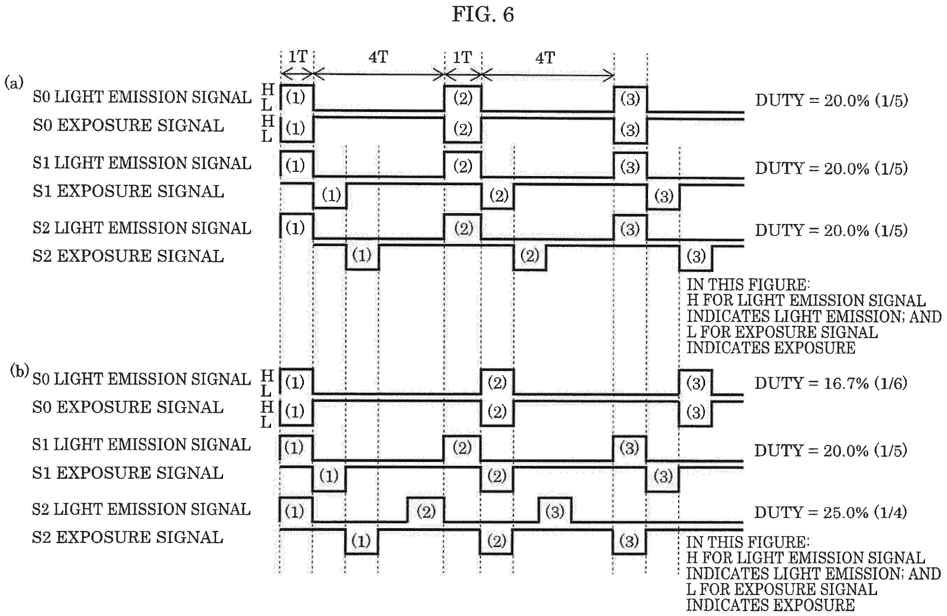

Here, in order to facilitate understanding of the imaging device and the solid-state imaging element used in the imaging device according to the present embodiment, a typical imaging device will be described with reference to (a) in FIG. 6.

FIG. 6 illustrates, in (a), the sequence of signal processing in a typical imaging device, including explanations of typical "aliasing".

In the typical imaging device in (a) in FIG. 6, the light emission signal (1) and the exposure signal (1) correspond to each other and the light emission signal (2) and the exposure signal (2) correspond to each other in each of S0, S1, and S2. However, in the case of measuring a distance in a large space (distant area, long distance), when reflected light traveling a distance greater than a distance measurement range is received, there occurs "aliasing" in which the light emission signal (1) and the exposure signal (2) correspond to each other and the light emission signal (2) and the exposure signal (3) correspond to each other in (a) in FIG. 6; a phenomenon in which the distance to an object inherently present outside the distance measurement range is erroneously measured (which is referred to as "aliasing").

In (a) in FIG. 6, the light emission signal (exposure signal) is repeatedly output in a fixed duty cycle of 20% with a width of 1T and a pause of 4T, but, when the pause is reduced from 4T to 9T (from 20% to 10% in duty), the effects of aliasing are reduced. However, in order to obtain the same amount of signals corresponding to the above duty, it is necessary to double the exposure time, causing a new problem such as a lower frame rate.

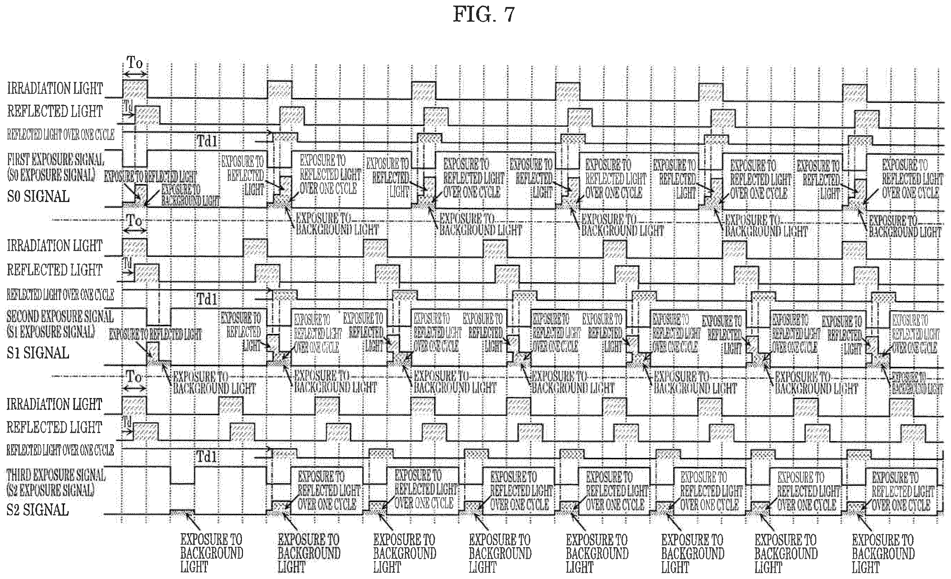

With the imaging device and the solid-state imaging element used in the imaging device according to the present embodiment, it is possible to solve the above-described problem. Details will be described with reference to (b) in FIG. 6 and FIG. 7.

FIG. 6 illustrates, in (b), the sequence of signal processing in the imaging device according to the present embodiment. In this figure, the positional relationship between the light emission signal (1) and the exposure signal (1) and the phase relationship between the light emission signal (2) and the exposure signal (2) are the same as those in S0, S1, and S2 in (a)in FIG. 6. Under this condition, the duty of each of the light emission signal and the exposure signal, i.e., S0, S1, and S2, is determined in such a way that the positional relationship between the light emission signal (1) and the exposure signal (2) and the phase relationship between the light emission signal (2) and the exposure signal (3) are the same in S0, S1, and S2. In other words, in the case of determining the cycle in each pattern of the phase relationship between the light emission signal and the exposure signal, controller 3 outputs the light emission signal and the exposure signal in such a way that the phase relationship between the light emission signal and the exposure signal generated next to the exposure signal corresponding to the light emission signal in each pattern becomes the same.

In (b) in FIG. 6, as an example, the duty of the S0 light emission signal and the S0 exposure signal is set to 16.7%, the duty of the S1 light emission signal and the S1 exposure signal is set to 20%, and the duty of the S2 light emission signal and the S2 exposure signal is set to 25%.

Next, with reference to FIG. 7 illustrating an example of the timings for the light emission signal and the exposure signal and the exposure amount of imaging device 10 according to Embodiment 1, details of the operation of repeating light emission and exposure in the distance measuring operation by imaging device 10 according to the present embodiment will be described.

As described above, the present embodiment provides a plurality of signal accumulators (as an example, three signal accumulators) in which signals (accumulation signals) detected by the same pixel included in solid-state imaging element 20 are accumulated. The length of each of the first, second, and third exposure signal periods in the first, second, and third light emission/exposure periods in which the signals (accumulation signals) are accumulated in the plurality of signal accumulators is set to To which is the same as the length of the light emission signal period. The delay time of the first exposure signal with respect to the timing at which light source unit 1 receives the light emission signal and emits light is set to 0.

Thus, the first exposure signal period is set to a period during which the light emission signal is transmitted (high level). The delay time of the second exposure signal is set to To which is the sum of first delay time 0 and first exposure signal period To. The delay time of the third exposure signal is set to $2 \times$ To which is the sum of second delay time To and second exposure period To. Accordingly, the exposure amount of background light is equal in the first, second, and third exposure signal periods.

Furthermore, in the present embodiment, the repetition cycle of each of the light emission signal and the exposure signal in the first light emission/exposure period is set to six times the length To of the light emission signal period, the repetition cycle of each of the light emission signal and the exposure signal in the second light emission/exposure period is set to five times the length To of the light emission signal period, and the repetition cycle of each of the light emission signal and the exposure signal in the third light emission/exposure period is set to four times the length To of the light emission signal period.

In other words, the average of the cycles of repetition throughout the light emission/exposure period is no different from five times the length To of the light emission signal period which is one of the cycles of repetition for the light emission/exposure period generally set using the rectangular-wave TOF method (pulse TOF method) in which the repetition of light emission and exposure includes a phase in which no exposure is performed.

Furthermore, FIG. 7 indicates the starting parts of the m repetitions of the light emission signals and the exposure signals in the first, second, and third light emission/exposure periods. In addition, FIG. 7 illustrates the case where delay Td dependent on the optical path of reflected light from a subject with respect to the light emission signal timing (irradiation light) is less than the sum of first delay time 0 and first exposure signal period To (i.e. To). Moreover, FIG. 7 illustrates the case where the delay dependent on the optical path of the reflected light with respect to the light emission signal timing (irradiation light) is Td1 which exceeds $6 \times$ To which is the repetition cycle of each of the light emission signal and the exposure signal in the first light emission/exposure period, that is, the case where there is an object that may cause what is called aliasing.

In the first exposure period that is chronologically the first, exposure to the first half of the reflected light from the subject and the background light is performed. In the first exposure period that is chronologically the second and onward, exposure to the first half of the reflected light from the subject, the reflected light from an object of which the delay dependent on the optical path with respect to the light emission signal timing (irradiation light) exceeds one cycle of repetition of the light emission/exposure period, that is, an object which may cause what is called aliasing, and the background light is performed.

In the second exposure period that is chronologically the first, exposure to the second half of the reflected light from the subject and the background light is performed. In the second exposure period that is chronologically the second and onward, exposure to the second half of the reflected light from the subject, the reflected light from an object of which the delay dependent on the optical path with respect to the light emission signal timing (irradiation light) exceeds one cycle of repetition of the light emission/exposure period, that is, an object which may cause what is called aliasing, and the background light is performed.

In the third exposure period that is chronologically the first, exposure to only the background light is performed. In the third exposure period that is chronologically the second and onward, exposure to the reflected light from an object of which the delay dependent on the optical path with respect to the light emission signal timing (irradiation light) exceeds one cycle of repetition of the light emission/exposure period, that is, an object which may cause what is called aliasing, and the background light is performed.

In other words, exposure is performed so as to include all reflected light from the subject in the period which is the sum of the first exposure signal period and the second exposure signal period. The exposure amount in the second exposure signal period is greater when delay Td of the reflected light from the subject with respect to the light emission signal timing is greater. Exposure to the reflected light from an object of which the delay dependent on the optical path with respect to the light emission signal timing (irradiation light) is Td1 which exceeds $6 \times$ To which is the repetition cycle of each of the light emission signal and the exposure signal in the first light emission/exposure period (an object which may cause what is called aliasing) is performed equally in the first, second, and third exposure signal periods as with the background light.

This means that controller 3 generates two or more patterns of varying phase relationships between the light emission signal and the exposure signal, and furthermore, outputs the light emission signal and the exposure signal in a cycle that is different between at least two of the patterns.

Therefore, in Expression 2 for calculating distance L, the reflected light from the object which may cause what is called aliasing can be eliminated as with the background light.

As described above with reference to the drawings, the imaging device and the solid-state imaging element used in the imaging device according to the present embodiment eliminates the reflected light from an object of which the delay dependent on the optical path with respect to the light emission signal timing (irradiation light) exceeds one cycle of repetition of the light emission/exposure period, that is, an object which may cause what is called aliasing, without adding special arithmetic processing, or increasing the light emission signal period, that is, pulse width To of the irradiation light, or increasing the average of the cycles of repetition throughout the light emission/exposure period. With this, it is possible to provide a high-speed, high-accuracy imaging device which can eliminate what is called aliasing in distance measurement.

Stated differently, (1) the width of the light emission signal which determines distance measurement accuracy is not changed, and furthermore (2) the average of the cycles of repetition of the light emission and the exposure is maintained, and thus the frame rate is not lowered, and (3) all exposure to the reflected light from an object of which the flight time (the delay dependent on the optical path) exceeds one cycle of repetition of the light emission and the exposure has the same signal amount, as with the background light, according to exposure signals which have different timings with respect to the timings of the light emission signals and instruct exposure for a signal to be accumulated in each of per-pixel different signal accumulators which accumulate signals (accumulation signals) detected by the same pixel of the light receiver. Thus, by removing the calculation process of subtracting the background light in the calculation for determining a distance signal from an imaging signal, it is possible to eliminate what is called aliasing in distance measurement at high speed with high accuracy.

Furthermore, in the present embodiment, the calculation for determining a distance signal from an imaging signal does not become complex including setting conditions for different cases, and the circuit size for signal processing is reduced, making it possible to downsize the imaging device and the solid-state imaging element used in the imaging device.

VARIATION 1 OF EMBODIMENT 1

In a typical imaging device, S0 light emission/exposure signals and S2 light emission/exposure signals are different in the heat quantity per unit time because of a difference in the electric current value per unit time. Depending on the thermal characteristics of a component used in the imaging device, there is a problem of increased variations in the performance and characteristics of distance measurement. In particular, in the light source unit (a light source (such as a light-emitting element, an LED, and an LD) and a drive circuit (driver) for the light source), the effects of such thermal characteristics become noticeable.

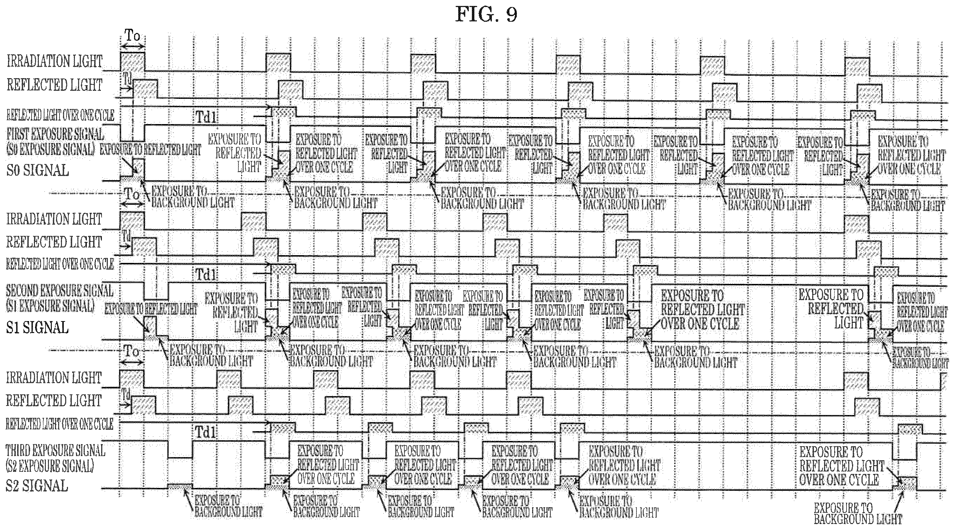

However, the imaging device and the solid-state imaging element used in the imaging device according to the present variation can solve the above-described problem. Details will be described with reference to c and FIG. 9.

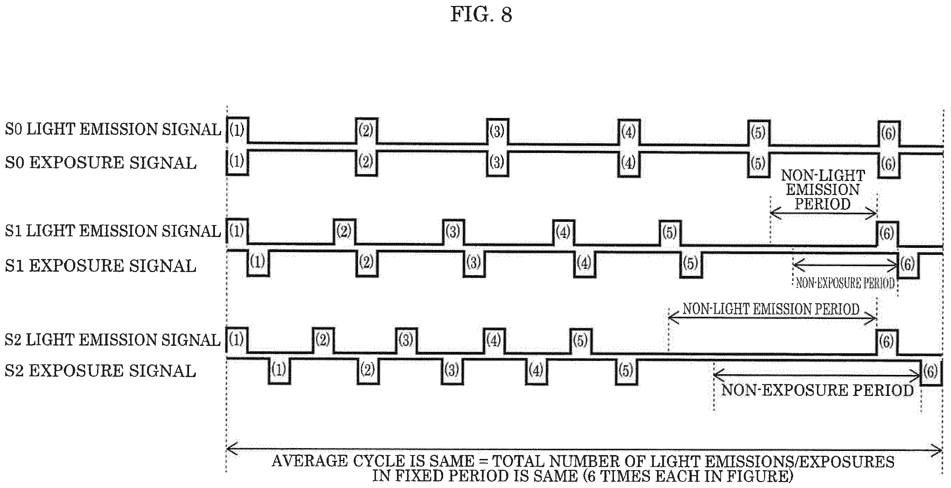

FIG. 8 illustrates the sequence of signal processing in an imaging device according to Variation 1 of Embodiment 1. Similar to Embodiment 1, S0, S1, and S2 light emission/exposure signals have different cycles (duties), and furthermore, non-light emission periods and non-exposure periods are established so as to make the average cycles the same. In other words, controller 3 establishes a period during which at least the light emission signal that is otherwise periodically generated is not generated. Furthermore, controller 3 establishes a period during which at least the light emission signal that is otherwise periodically generated is not generated in such a way that the average cycle in each pattern of the phase relationship between the light emission signal and the exposure signal becomes the same. In addition, controller 3 establishes a period during which the light emission signal that is otherwise periodically generated and the exposure signal corresponding to the light emission signal that is otherwise periodically generated are not generated. In addition, controller 3 establishes a period during which the light emission signal that is periodically generated and the exposure signal corresponding to the light emission signal that is otherwise periodically generated are not generated in such a way that the above-mentioned average cycle in each pattern becomes the same.

FIG. 9 illustrates an example of the timings for the light emission signal and the exposure signal and the exposure amount of imaging device 10 according to Variation 1 of Embodiment 1. This is different from Embodiment 1 in that the cycle of repetition of the light emission signal and the exposure signal is relatively small and a pause is provided midway in the repetition of the light emission signal and the exposure signal in each of the second and third light emission/exposure periods so that the total length of the light emission/exposure period thereof matches the first light emission/exposure period. With this, it is possible to inhibit a reduction in the light emission intensity of the light source that is caused when the repetition cycle of the light emission periods is shortened.

Furthermore, since the S0 light emission/exposure signal and the S2 light emission/exposure signal have the same heat quantity per unit time, it is possible to reduce variations in the performance and characteristics of distance measurement that depend on the thermal characteristics of the light source unit (the light source (such as the light-emitting element, the LED, and the LD) and the drive circuit (driver) for the light source) and the light receiver (such as the solid-state imaging element).

Thus, in Variation 1 of the present embodiment, in addition to the same advantageous effects as in Embodiment 1, the advantageous effect that the distance measurement accuracy improves is further achieved.

VARIATION 2 OF EMBODIMENT 1

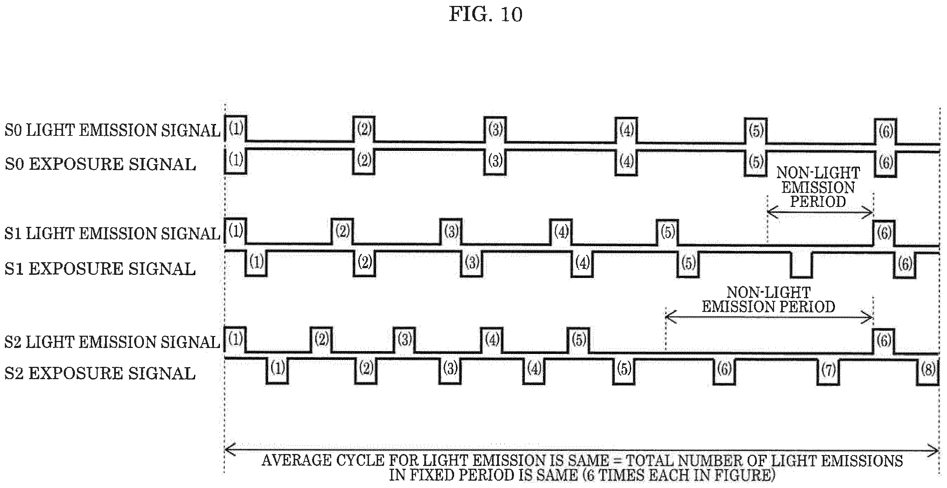

FIG. 10 illustrates the sequence of signal processing in an imaging device according to Variation 2 of Embodiment 1. Similar to Embodiment 1, S0, S1, and S2 light emission/exposure signals have different cycles (duties), and furthermore, non-light emission periods are established so as to make at least the average cycles for light emission the same.

With this, the S0 light emission signal and the S2 light emission signal have the same heat quantity per unit time; thus, in particular, it is possible to reduce variations in the performance and characteristics of distance measurement by preventing the effects of the thermal characteristics of the light source unit (the light source (such as the light-emitting element, the LED, and the LD)) and the drive circuit (driver) for the light source which significantly affect the characteristics of the imaging device.

Thus, in Variation 1 of the present embodiment, in addition to the same advantageous effects as in Embodiment 1, the advantageous effect that the distance measurement accuracy improves is further achieved.

EMBODIMENT 2

The configurations and operations of an imaging device and a solid-state imaging element according to Embodiment 2 will be described below with reference to the drawings, focusing on differences from Embodiment 1.

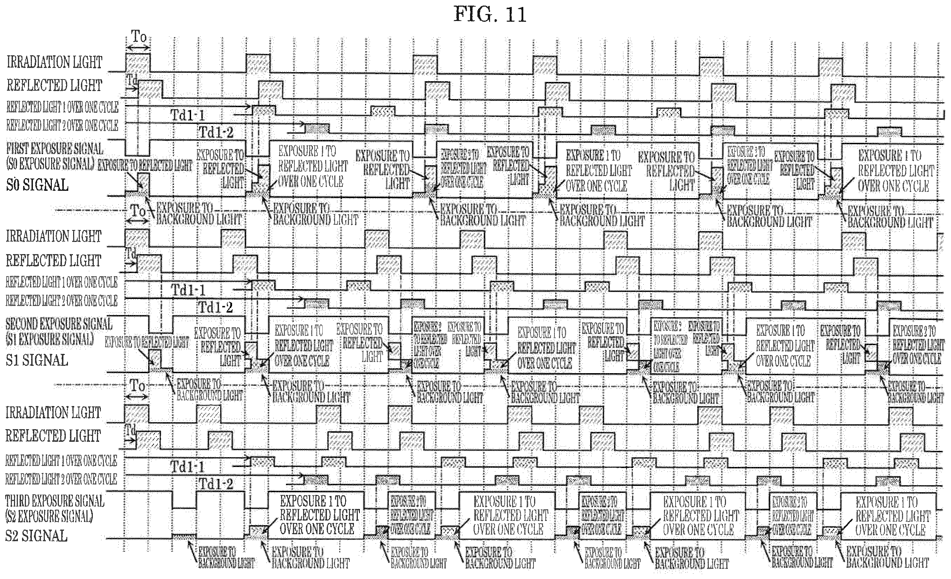

FIG. 11 illustrates an example of the timings for the light emission signal and the exposure signal and the exposure amount of imaging device 10 according to Embodiment 2.

The present embodiment provides, as described earlier, a plurality of signal accumulators (as an example, three signal accumulators) in which signals (accumulation signals) detected by the same pixel included in solid-state imaging element 20 are accumulated. The length of each of the first, second, and third exposure signal periods in the first, second, and third light emission/exposure periods in which the signals are accumulated in the plurality of signal accumulators is set to To which is the same as the length of the light emission signal period. The delay time of the first exposure signal with respect to the timing at which light source unit 1 receives the light emission signal and emits light is set to 0.

Thus, the first exposure signal period is set to a period during which the light emission signal is transmitted (high level). The delay time of the second exposure signal is set to To which is the sum of first delay time 0 and first exposure signal period To. The delay time of the third exposure signal is set to $2 \times$ To which is the sum of second delay time To and second exposure period To. Accordingly, the exposure amount of background light is equal in the first, second, and third exposure signal periods.

Furthermore, in the present embodiment, the cycle of repetition of the light emission signal and the exposure signal in the first light emission/exposure period is set to five and seven times the length To of the light emission signal period which are alternately repeated, the cycle of repetition of the light emission signal and the exposure signal in the second light emission/exposure period is set to four and six times the length To of the light emission signal period which are alternately repeated, and the cycle of repetition of the light emission signal and the exposure signal in the third light emission/exposure period is set to three and five times the length To of the light emission signal period which are alternately repeated. This means that controller 3 generates two or more patterns of varying phase relationships between the light emission signal and the exposure signal, and furthermore, outputs the light emission signal and the exposure signal in a cycle that is different between at least two of the patterns.

In other words, the average of the cycles of repetition throughout the light emission/exposure period is no different from five times the length To of the light emission signal period which is one cycle of repetition for the light emission/exposure period generally set using the rectangular-wave TOF method (pulse TOF method) in which the repetition of light emission and exposure includes a phase in which no exposure is performed.

Next, FIG. 11 indicates the starting parts of the m repetitions of the light emission signals and the exposure signals in the first, second, and third light emission/exposure periods.

In addition, FIG. 11 illustrates the case where delay Td dependent on the optical path of reflected light from a subject with respect to the light emission signal timing (irradiation light) is less than the sum of first delay time 0 and first exposure signal period To (i.e. To). Moreover, FIG. 11 illustrates the case where the delay dependent on the optical path of the reflected light with respect to the light emission signal timing (irradiation light) is Td1-1 and Td1-2 which are greater than $5 \times$ To, which is the smallest one of cycles of repetition of the light emission signal and the exposure signal in the first light emission/exposure period, by a factor of more than one to less than 2, that is, the case where there are two kinds of objects 1-1 and 1-2 that may cause what is called aliasing.

In the first exposure period that is chronologically the first, exposure to the first half of the reflected light from the subject and the background light is performed. In the first exposure period that is chronologically the second, exposure to the first half of the reflected light from the subject, the reflected light from an object of which the delay dependent on the optical path with respect to the light emission signal timing (irradiation light) exceeds one cycle of repetition of the light emission/exposure period, that is, object 1-1 which may cause what is called aliasing, and the background light is performed. In the first exposure period that is chronologically the third, exposure to the first half of the reflected light from the subject, the reflected light from an object of which the delay dependent on the optical path with respect to the light emission signal timing (irradiation light) exceeds one cycle of repetition of the light emission/exposure period, that is, object 1-2 which may cause what is called aliasing, and the background light is performed. From here on, the same exposures performed chronologically the second and the third are alternately repeated.

In the second exposure period that is chronologically the first, exposure to the second half of the reflected light from the subject and the background light is performed. In the second exposure period that is chronologically the second, exposure to the second half of the reflected light from the subject, the reflected light from an object of which the delay dependent on the optical path with respect to the light emission signal timing (irradiation light) exceeds one cycle of repetition of the light emission/exposure period, that is, object 1-1 which may cause what is called aliasing, and the background light is performed. In the second exposure period that is chronologically the third, exposure to the second half of the reflected light from the subject, the reflected light from an object of which the delay dependent on the optical path with respect to the light emission signal timing (irradiation light) exceeds one cycle of repetition of the light emission/exposure period, that is, object 1-2 which may cause what is called aliasing, and the background light is performed. From here on, the same exposures performed chronologically the second and the third are alternately repeated.

In the third exposure period that is chronologically the first, exposure to only the background light is performed. In the third exposure period that is chronologically the second, exposure to the reflected light from an object of which the delay dependent on the optical path with respect to the light emission signal timing (irradiation light) exceeds one cycle of repetition of the light emission/exposure period, that is, object 1-1 which may cause what is called aliasing, and the background light is performed. In the third exposure period that is chronologically the third, exposure to the reflected light from an object of which the delay dependent on the optical path with respect to the light emission signal timing (irradiation light) exceeds one cycle of repetition of the light emission/exposure period, that is, object 1-2 which may cause what is called aliasing, and the background light is performed. From here on, the same exposures performed chronologically the second and the third are alternately repeated.

In other words, exposure is performed so as to include all reflected light from the subject in the period which is the sum of the first exposure signal period and the second exposure signal period. The exposure amount in the second exposure signal period is greater when delay Td of the reflected light from the subject with respect to the light emission signal timing is greater. Exposure to the reflected light from objects 1-1 and 1-2 which may cause what is called aliasing is performed equally in the first, second, and third exposure signal periods as with the background light. Here, the reflected light from objects 1-1 and 1-2 is the reflected light of which the delay dependent on the optical path with respect to the light emission signal timing (irradiation light) is Td1-1 and Td1-2 which are greater than $5 \times$ To, which is the smallest one of the cycle of repetition of the light emission signal and the exposure signal in the first light emission/exposure period, by a factor of more than one to less than 2.

Therefore, in Expression 2 for calculating distance L, the reflected light from the object which may cause what is called aliasing can be eliminated as with the background light.

As described above with reference to the drawings, the imaging device and the solid-state imaging element used in the imaging device according to the present embodiment eliminates the reflected light from an object of which the delay dependent on the optical path with respect to the light emission signal timing (irradiation light) is greater than one cycle of repetition of the light emission/exposure period and less than two cycles thereof, that is, an object which may cause what is called aliasing, without adding special arithmetic processing, or increasing the light emission signal period, that is, pulse width To of the irradiation light, or increasing the average of the cycles of repetition throughout the light emission/exposure period. With this, it is possible to not only produce the same advantageous effects in Embodiment 1, but also eliminate what is called aliasing in distance measurement in a wider range.

VARIATION 1 OF EMBODIMENT 2

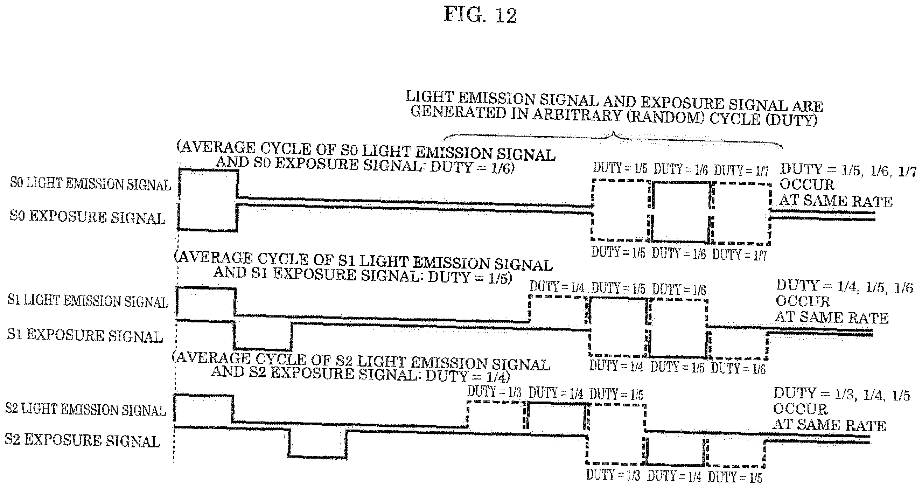

Note that in the case of the average cycle (Duty, average Duty) indicated in Embodiment 2, controller 3 may set the cycle (duty) to be arbitrary (random). More specifically, the following is possible as illustrated in FIG. 12:

(i) the S0 light emission signal and the S0 exposure signal are generated in cycles in which Duty = 1/5 and Duty = 1/7 occur at the same rate as Duty = 1/6;
(ii) the S1 light emission signal and the S1 exposure signal are generated in cycles in which Duty = 1/4 and Duty = 1/6 occur at the same rate as Duty = 1/5; and
(iii) the S2 light emission signal and the S2 exposure signal are generated in cycles in which Duty = 1/3 and Duty = 1/5 occur at the same rate as Duty = 1/4.

With this, a plurality of (as an example, three or more) aliasing phenomena can be reduced, and it is possible to not only produce the same advantageous effects in Embodiments 1 and 2, but also eliminate what is called aliasing in distance measurement in a wider range.

Note that the present variation can be used as a variation of Embodiment 1 described above.

VARIATION 2 OF EMBODIMENT 2

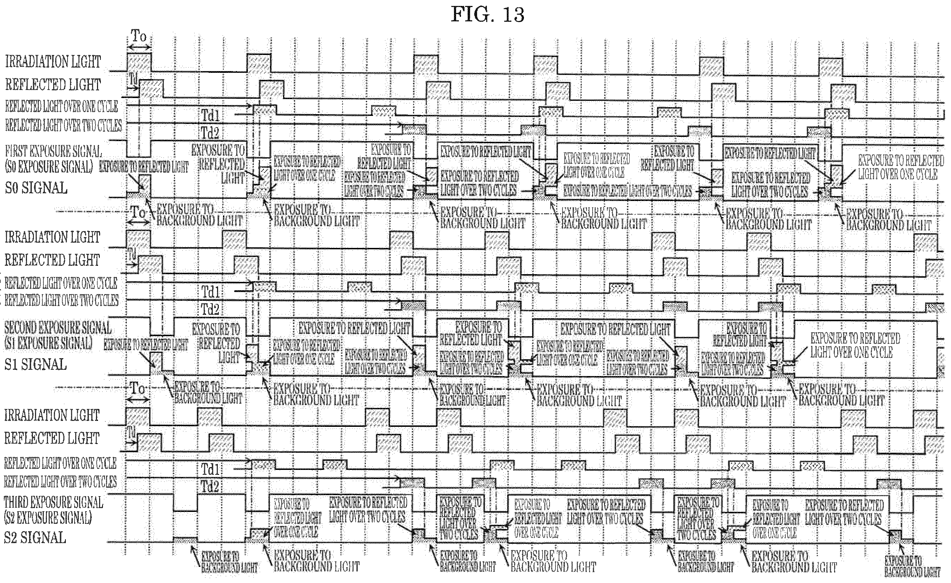

FIG. 13 illustrates an example of the timings for the light emission signal and the exposure signal and the exposure amount of imaging device 10 according to Variation 2 of the present embodiment.

The present embodiment provides, as described above, a plurality of signal accumulators (as an example, three signal accumulators) in which signals (accumulation signals) detected by the same pixel included in solid-state imaging element 20 are accumulated. The length of each of the first, second, and third exposure signal periods in the first, second, and third light emission/exposure periods in which the signals are accumulated in the plurality of signal accumulators is set to To which is the same as the length of the light emission signal period. The delay time of the first exposure signal with respect to the timing at which light source unit 1 receives the light emission signal and emits light is set to 0.

Thus, the first exposure signal period is set to a period during which the light emission signal is transmitted (high level). The delay time of the second exposure signal is set to To which is the sum of first delay time 0 and first exposure signal period To. The delay time of the third exposure signal is set to $2 \times$ To which is the sum of second delay time To and second exposure period To. Accordingly, the exposure amount of background light is equal in the first, second, and third exposure signal periods.

Furthermore, in the present embodiment, the cycle of repetition of the light emission signal and the exposure signal in the first light emission/exposure period is set to five and seven times the length To of the light emission signal period which are alternately repeated. The cycle of repetition of the light emission signal and the exposure signal in the second light emission/exposure period is set to four and seven times the length To of the light emission signal period which are alternately repeated. The cycle of repetition of the light emission signal and the exposure signal in the third light emission/exposure period is set to three and seven times the length To of the light emission signal period which are alternately repeated.

In other words, the average of the cycles of repetition throughout the light emission/exposure period is 5.5 times the length To of the light emission signal period, which is only 10% greater than five times the length To of the light emission signal period, which is one cycle of repetition for the light emission/exposure period generally set using the rectangular-wave TOF method (pulse TOF method) in which the repetition of light emission and exposure includes a phase in which no exposure is performed.

Next, FIG. 13 indicates the starting parts of the m repetitions of the light emission signals and the exposure signals in the first, second, and third light emission/exposure periods. FIG. 13 illustrates the case where delay Td dependent on the optical path of reflected light from a subject with respect to the light emission signal timing (irradiation light) is less than the sum of first delay time 0 and first exposure signal period To (i.e. To). Moreover, FIG. 13 illustrates the case where the delay dependent on the optical path of the reflected light with respect to the light emission signal timing (irradiation light) is Td1 which is greater than $5 \times$ To, which is the smallest one of the cycles of repetition of the light emission signal and the exposure signal in the first light emission/exposure period, by a factor of more than one to less than 2, and Td2 which is greater than $5 \times$ To by a factor of more than 2, that is, the case where there are two kinds of objects 1 and 2 that may cause what is called aliasing.

In the first exposure period that is chronologically the first, exposure to the first half of the reflected light from the subject and the background light is performed. In the first exposure period that is chronologically the second, exposure to the second half of the reflected light from the subject, the reflected light from an object of which the delay dependent on the optical path with respect to the light emission signal timing (irradiation light) exceeds one cycle of repetition of the light emission/exposure period, that is, object 1 which may cause what is called aliasing, and the background light is performed.

In the first exposure period that is chronologically the third, exposure to the first half of the reflected light from the subject, the reflected light from an object of which the delay dependent on the optical path with respect to the light emission signal timing (irradiation light) exceeds two cycles of repetition of the light emission/exposure period, that is, object 2 which may cause what is called aliasing, and the background light is performed. In the first exposure period that is chronologically the fourth, exposure to the first half of the reflected light from the subject, the reflected light from an object of which the delay dependent on the optical path with respect to the light emission signal timing (irradiation light) exceeds one cycle of repetition of the light emission/exposure period, that is, object 1 which may cause what is called aliasing, the reflected light from an object of which the delay dependent on the optical path with respect to the light emission signal timing (irradiation light) exceeds two cycles of repetition of the light emission/exposure period, that is, object 2 which may cause what is called aliasing, and the background light is performed. From here on, the same exposures performed chronologically the third and the fourth are alternately repeated.

In the second exposure period that is chronologically the first, exposure to the second half of the reflected light from the subject and the background light is performed. In the second exposure period that is chronologically the second, exposure to the second half of the reflected light from the subject, the reflected light from an object of which the delay dependent on the optical path with respect to the light emission signal timing (irradiation light) exceeds one cycle of repetition of the light emission/exposure period, that is, object 1 which may cause what is called aliasing, and the background light is performed.

In the second exposure period that is chronologically the third, exposure to the second half of the reflected light from the subject, the reflected light from an object of which the delay dependent on the optical path with respect to the light emission signal timing (irradiation light) exceeds two cycles of repetition of the light emission/exposure period, that is, object 2 which may cause what is called aliasing, and the background light is performed. In the second exposure period that is chronologically the fourth, exposure to the second half of the reflected light from the subject, the reflected light from an object of which the delay dependent on the optical path with respect to the light emission signal timing (irradiation light) exceeds one cycle of repetition of the light emission/exposure period, that is, object 1 which may cause what is called aliasing, the reflected light from an object of which the delay dependent on the optical path with respect to the light emission signal timing (irradiation light) exceeds two cycles of repetition of the light emission/exposure period, that is, object 2 which may cause what is called aliasing, and the background light is performed. From here on, the same exposures performed chronologically the third and the fourth are alternately repeated.

In the third exposure period that is chronologically the first, exposure to only the background light is performed. In the third exposure period that is chronologically the second, exposure to the reflected light from an object of which the delay dependent on the optical path with respect to the light emission signal timing (irradiation light) exceeds one cycle of repetition of the light emission/exposure period, that is, object 1 which may cause what is called aliasing, and the background light is performed.

In the third exposure period that is chronologically the third, exposure to the reflected light from an object of which the delay dependent on the optical path with respect to the light emission signal timing (irradiation light) exceeds two cycles of repetition of the light emission/exposure period, that is, object 2 which may cause what is called aliasing, and the background light is performed. In the third exposure period that is chronologically the fourth, exposure to the reflected light from an object of which the delay dependent on the optical path with respect to the light emission signal timing (irradiation light) exceeds one cycle of repetition of the light emission/exposure period, that is, object 1 which may cause what is called aliasing, the reflected light from an object of which the delay dependent on the optical path with respect to the light emission signal timing (irradiation light) exceeds two cycles of repetition of the light emission/exposure period, that is, object 2 which may cause what is called aliasing, and the background light is performed. From here on, the same exposures performed chronologically the third and the fourth are alternately repeated.

In other words, exposure is performed so as to include all reflected light from the subject in the period which is the sum of the first exposure signal period and the second exposure signal period. The exposure amount in the second exposure signal period is greater when delay Td of the reflected light from the subject with respect to the light emission signal timing is greater.

Exposure to the reflected light from objects 1 and 2 which may cause what is called aliasing is performed equally in the first, second, and third exposure signal periods as with the background light. Here, the reflected light from objects 1 and 2 is the reflected light of which the delay dependent on the optical path with respect to the light emission signal timing (irradiation light) is Td1 which is greater than $5 \times$ To, which is the smallest one of the cycles of repetition of the light emission signal and the exposure signal in the first light emission/exposure period, by a factor of more than one to less than 2, and Td2 which is greater than $5 \times$ To by a factor of more than 2. Therefore, in Expression 2 for calculating distance L, the reflected light from the object which may cause what is called aliasing can be eliminated as with the background light.

As described above, in Variation 2 of the present embodiment, the reflected light from an object of which the delay dependent on the optical path with respect to the light emission signal timing (irradiation light) exceeds two cycles of repetition of the light emission/exposure period, that is, an object which may cause what is called aliasing, is eliminated without adding special arithmetic processing, or increasing the light emission signal period, that is, pulse width To of the irradiation light, or increasing the average of the cycles of repetition throughout the light emission/exposure period. With this, in addition to the same advantageous effects in Embodiments 1 and 2, the advantageous effect of allowing elimination of what is called aliasing in distance measurement in a wider range are achieved.

CONCLUSION

Note that out of the TOF methods, the rectangular-wave TOF method in which the repetition of light emission and exposure includes a phase in which no exposure is performed is exemplified as the method for obtaining a distance image in the above-described embodiments and variation thereof, but the method for obtaining a distance image is not limited to the rectangular-wave TOF method. The advantageous effects of the present invention can be obtained using other methods such as the modulation (phase) TOF method (irradiation light with sine waves) and the rectangular-wave modulation (phase) TOF method (irradiation light with rectangular waves) in which a distance image is obtained by calculation from signals obtained at four-phase exposure timings with different phases at every 90 degrees using a light source modulated for sine waves or rectangular waves.

Furthermore, although the above embodiments and variations thereof describe the case where exposure to the background light is performed (the background light is received) in order to improve the distance measurement accuracy, the advantageous effects of the present invention can be obtained even when exposure to only the irradiation light is performed (only the irradiation light is received) without performing exposure to the background light (without receiving the background light).

Furthermore, the above embodiments and variations thereof describe the imaging device, and the configuration of the imaging device according to the present disclosure is not limited to the imaging device which measures a distance according to distance information; it is possible to apply the present disclosure, for example, to a physical quantity detection device which accurately detects other physical quantity (for example, shape, temperature, and radiodensity) and an imaging device which accurately renders data of a captured image.

OTHER EMBODIMENTS

Although the imaging devices and the solid-state imaging elements according to the present disclosure have been described thus far based on the above embodiments and variations thereof, the imaging devices and the solid-state imaging elements according to the present disclosure are not limited to the embodiments and variations thereof described above. The present disclosure includes other embodiments implemented through a combination of arbitrary structural elements of the above embodiments and variations thereof, or variations obtained through the application of various modifications to the above embodiments and variations thereof that may be conceived by a person having ordinary skill in the art, without departing from the essence of the present disclosure, and various devices in which the imaging device and the solid-state imaging element according to the present disclosure are built-in.

INDUSTRIAL APPLICABILITY

The imaging device according to the present invention enables accurate three-dimensional detection and measurement of a subject without depending on the surrounding environment, and is thus useful, for example, for stereoscopic detection, display, and rendering of the forms of persons, buildings, and organs and tissues of human bodies, animals, and plants using a point cloud and the like, and eye gaze detection, gesture recognition, obstacle detection, road surface detection, and the like.

REFERENCE MARKS IN THE DRAWINGS

| | |
|---|---|
| 1 | light source unit |
| 2 | light receiver |
| 3 | controller |
| 4 | calculator |
| 10 | imaging device |
| 20 | solid-state imaging element |
| 31 | light emission signal compositing unit |
| 32 | light emission phase controller |
| 33 | light emission repetition controller |
| 34 | exposure signal compositing unit |
| 35 | exposure phase controller |
| 36 | exposure repetition controller |
| 101 | photodiode |
| 102 | vertical transfer portion |
| 103 | horizontal transfer portion |
| 104 | signal charge detector |
| 105 | SUB terminal |

**Claims**

1.  An imaging device which measures a distance to a subject by emitting light and receiving reflected light of the light emitted, the imaging device comprising:

    a light source unit configured to emit the light at a timing of a light emission signal instructing emission of the light;
    a light receiver which performs exposure at a plurality of different timings according to an exposure signal instructing exposure to the reflected light from the subject, and outputs a plurality of imaging signals;
    a calculator which receives the plurality of imaging signals and calculates the distance; and
    a controller which generates two or more patterns of varying phase relationships between the light emission signal and the exposure signal, and outputs the light emission signal and the exposure signal in a cycle that is different between at least two of the two or more patterns.

2.  The imaging device according to claim 1,
    wherein the controller determines the cycle in each of the two or more patterns to output the light emission signal and the exposure signal in a cycle in which a phase relationship between the light emission signal and the exposure signal generated next to the exposure signal corresponding to the light emission signal in each of the two or more patterns is the same.

3.  The imaging device according to claim 1,
    wherein the controller outputs the light emission signal and the exposure signal in the cycle that is arbitrary.

**4.** The imaging device according to claim 2,
wherein the controller establishes a period during which at least the light emission signal that is otherwise periodically generated is not generated.

**5.** The imaging device according to claim 3,
wherein the controller establishes a period during which at least the light emission signal that is otherwise periodically generated is not generated to make an average cycle in each of the two or more patterns the same.

**6.** The imaging device according to claim 2,
wherein the controller establishes a period during which the light emission signal that is otherwise periodically generated and the exposure signal corresponding to the light emission signal that is otherwise periodically generated are not generated.

**7.** The imaging device according to claim 3,
wherein the controller establishes a period during which the light emission signal that is otherwise periodically generated and the exposure signal corresponding to the light emission signal that is otherwise periodically generated are not generated to make an average cycle in each of the two or more patterns the same.

**8.** The imaging device according to any one of claims 1 to 7,
wherein the light receiver includes:

a solid-state imaging element which includes: a plurality of pixels; and a plurality of signal accumulators respectively associated with the plurality of pixels, and accumulates signals in the plurality of signal accumulators, and in the solid-state imaging element, each of the plurality of signal accumulators that accumulate signals detected by the same pixel accumulates the signals resulting from exposure performed in an exposure period of which a timing of the exposure signal instructing the exposure to the reflected light from the subject is different from a timing of the light emission signal.

**9.** The imaging device according to claim 8,
wherein the controller causes each of the plurality of signal accumulators that accumulate the signals detected by the same pixel of the light receiver to accumulate the signals through a plurality of light emissions and corresponding exposure, and differentiates a repetition cycle of the light emission signal and a repetition cycle of the exposure signal of which a timing for instructing the exposure to the reflected light from the subject is different from the timing of the light emission signal.

**10.** The imaging device according to claim 8 or 9,
wherein the solid-state imaging element is a charge coupled device (CCD) solid-state imaging element.

**11.** The imaging device according to any one of claims 1 to 10, which measures the distance to the subject using a time-of-flight (TOF) method.

**12.** A solid-state imaging element used in an imaging device which includes: a light source unit which emits light at a timing of a light emission signal instructing emission of the light; a light receiver including the solid-state imaging element; and a calculator which receives an imaging signal from the light receiver, and calculates a distance, the imaging device measuring a distance to a subject by generating two or more patterns of varying phase relationships between the light emission signal and an exposure signal, further generating the light emission signal and the exposure signal in a cycle that is different between at least two of the two or more patterns, emitting the light, and receiving reflected light of the light emitted,
wherein the solid-state imaging element performs exposure at a plurality of different timings according to the exposure signal instructing exposure to the reflected light from the subject, and outputs a plurality of the imaging signals.

FIG. 1

SUBJECT

IRRADIATION LIGHT

REFLECTED LIGHT OR
BACKGROUND LIGHT

LIGHT EMISSION
SIGNAL

LIGHT
SOURCE
UNIT

SOLID·STATE
IMAGING
ELEMENT

20

LIGHT RECEIVER

1

2

CONTROLLER

EXPOSURE
SIGNAL

IMAGING
SIGNAL

3

CALCULATOR

4

IMAGING DEVICE
(DISTANCE·MEASURING
IMAGING DEVICE)

10

CALCULATION RESULT
(DISTANCE SIGNAL AND
DISTANCE IMAGE)

FIG. 2

LIGHT EMISSION SIGNAL

LIGHT EMISSION SIGNAL COMPOSITING UNIT — 31

LIGHT EMISSION PHASE CONTROLLER — 32 ···· LIGHT EMISSION SIGNAL PHASE SETTING SIGNAL

LIGHT EMISSION REPETITION CONTROLLER — 33 ···· LIGHT EMISSION SIGNAL REPETITION SETTING SIGNAL

REFERENCE CLOCK (REFERENCE SIGNAL)

EXPOSURE SIGNAL

EXPOSURE SIGNAL COMPOSITING UNIT — 34

EXPOSURE PHASE CONTROLLER — 35 ···· EXPOSURE SIGNAL PHASE SETTING SIGNAL

EXPOSURE REPETITION CONTROLLER — 36 ···· EXPOSURE SIGNAL REPETITION SETTING SIGNAL

CONTROLLER — 3

EP 3 379 291 A1

FIG. 3

# FIG. 4

FIRST SET

N-TH SET

(a)

FIRST LIGHT EMISSION /EXPOSURE PERIOD | SECOND LIGHT EMISSION /EXPOSURE PERIOD | THIRD LIGHT EMISSION /EXPOSURE PERIOD

FIRST LIGHT EMISSION /EXPOSURE PERIOD | SECOND LIGHT EMISSION /EXPOSURE PERIOD | THIRD LIGHT EMISSION /EXPOSURE PERIOD

SIGNAL OUTPUT PERIOD

LIGHT EMISSION SIGNAL

EXPOSURE SIGNAL

m TIMES    m TIMES    m TIMES

m TIMES    m TIMES    m TIMES

$T_o$

IRRADIATION LIGHT

DELAY Td DEPENDENT ON OPTICAL PATH

REFLECTED LIGHT

FIRST EXPOSURE SIGNAL (S0 EXPOSURE SIGNAL)

EXPOSURE AMOUNT S0

EXPOSURE AMOUNT

EXPOSURE TO REFLECTED LIGHT

EXPOSURE TO BACKGROUND LIGHT

(b)

$T_o$

DELAY Td DEPENDENT ON OPTICAL PATH

SECOND EXPOSURE SIGNAL (S1 EXPOSURE SIGNAL)

EXPOSURE AMOUNT S1

EXPOSURE TO REFLECTED LIGHT

EXPOSURE TO BACKGROUND LIGHT

(c)

$T_o$

DELAY Td DEPENDENT ON OPTICAL PATH

THIRD EXPOSURE SIGNAL (S2 EXPOSURE SIGNAL)

EXPOSURE AMOUNT S2

EXPOSURE TO BACKGROUND LIGHT

(d)

EP 3 379 291 A1

## FIG. 5

FIRST SET

N-TH SET

(a)

LIGHT EMISSION SIGNAL

EXPOSURE SIGNAL

FIRST LIGHT EMISSION /EXPOSURE PERIOD

SECOND LIGHT EMISSION /EXPOSURE PERIOD

THIRD LIGHT EMISSION /EXPOSURE PERIOD

FIRST LIGHT EMISSION /EXPOSURE PERIOD

SECOND LIGHT EMISSION /EXPOSURE PERIOD

THIRD LIGHT EMISSION /EXPOSURE PERIOD

SIGNAL OUTPUT PERIOD

m TIMES   m TIMES   m TIMES     m TIMES     m TIMES     m TIMES

$T_0$

$T_0$

$T_0$

IRRADIATION LIGHT

DELAY Td DEPENDENT ON OPTICAL PATH   DELAY Td DEPENDENT ON OPTICAL PATH   DELAY Td DEPENDENT ON OPTICAL PATH

REFLECTED LIGHT

FIRST EXPOSURE SIGNAL (S0 EXPOSURE SIGNAL)

SECOND EXPOSURE SIGNAL (S1 EXPOSURE SIGNAL)

THIRD EXPOSURE SIGNAL (S2 EXPOSURE SIGNAL)

EXPOSURE AMOUNT S1

EXPOSURE AMOUNT S2

EXPOSURE AMOUNT S0

EXPOSURE TO REFLECTED LIGHT

EXPOSURE TO REFLECTED LIGHT

EXPOSURE AMOUNT

EXPOSURE TO BACKGROUND LIGHT

EXPOSURE TO BACKGROUND LIGHT

EXPOSURE TO BACKGROUND LIGHT

(b)

(c)

(d)

EP 3 379 291 A1

FIG. 6

(a)

S0 LIGHT EMISSION SIGNAL — DUTY = 20.0% (1/5)

S0 EXPOSURE SIGNAL

S1 LIGHT EMISSION SIGNAL — DUTY = 20.0% (1/5)

S1 EXPOSURE SIGNAL

S2 LIGHT EMISSION SIGNAL — DUTY = 20.0% (1/5)

S2 EXPOSURE SIGNAL

IN THIS FIGURE:
H FOR LIGHT EMISSION SIGNAL
INDICATES LIGHT EMISSION; AND
L FOR EXPOSURE SIGNAL
INDICATES EXPOSURE

(b)

S0 LIGHT EMISSION SIGNAL — DUTY = 16.7% (1/6)

S0 EXPOSURE SIGNAL

S1 LIGHT EMISSION SIGNAL — DUTY = 20.0% (1/5)

S1 EXPOSURE SIGNAL

S2 LIGHT EMISSION SIGNAL — DUTY = 25.0% (1/4)

S2 EXPOSURE SIGNAL

IN THIS FIGURE:
H FOR LIGHT EMISSION SIGNAL
INDICATES LIGHT EMISSION; AND
L FOR EXPOSURE SIGNAL
INDICATES EXPOSURE

EP 3 379 291 A1

FIG. 7

# FIG. 8

S0 LIGHT EMISSION SIGNAL

S0 EXPOSURE SIGNAL

NON-LIGHT
EMISSION
PERIOD

S1 LIGHT EMISSION SIGNAL

S1 EXPOSURE SIGNAL

NON-EXPOSURE PERIOD

NON-LIGHT EMISSION PERIOD

S2 LIGHT EMISSION SIGNAL

S2 EXPOSURE SIGNAL

NON-EXPOSURE PERIOD

AVERAGE CYCLE IS SAME = TOTAL NUMBER OF LIGHT EMISSIONS/EXPOSURES
IN FIXED PERIOD IS SAME (6 TIMES EACH IN FIGURE)

EP 3 379 291 A1

# FIG. 9

FIG. 10

EP 3 379 291 A1

S0 LIGHT EMISSION SIGNAL

S0 EXPOSURE SIGNAL

NON-LIGHT EMISSION PERIOD

S1 LIGHT EMISSION SIGNAL

S1 EXPOSURE SIGNAL

NON-LIGHT EMISSION PERIOD

S2 LIGHT EMISSION SIGNAL

S2 EXPOSURE SIGNAL

AVERAGE CYCLE FOR LIGHT EMISSION IS SAME = TOTAL NUMBER OF LIGHT EMISSIONS IN FIXED PERIOD IS SAME (6 TIMES EACH IN FIGURE)

FIG. 11

EP 3 379 291 A1

## FIG. 12

LIGHT EMISSION SIGNAL AND EXPOSURE SIGNAL ARE
GENERATED IN ARBITRARY (RANDOM) CYCLE (DUTY)

(AVERAGE CYCLE OF S0 LIGHT EMISSION SIGNAL
AND S0 EXPOSURE SIGNAL: DUTY = 1/6)

S0 LIGHT EMISSION SIGNAL

S0 EXPOSURE SIGNAL

DUTY = 1/5   DUTY = 1/6   DUTY = 1/7

DUTY = 1/5, 1/6, 1/7
OCCUR
AT SAME RATE

DUTY = 1/5   DUTY = 1/6   DUTY = 1/7

(AVERAGE CYCLE OF S1 LIGHT EMISSION SIGNAL
AND S1 EXPOSURE SIGNAL: DUTY = 1/5)

S1 LIGHT EMISSION SIGNAL

S1 EXPOSURE SIGNAL

DUTY = 1/4   DUTY = 1/5   DUTY = 1/6

DUTY = 1/4, 1/5, 1/6
OCCUR
AT SAME RATE

DUTY = 1/4   DUTY = 1/5   DUTY = 1/6

(AVERAGE CYCLE OF S2 LIGHT EMISSION SIGNAL
AND S2 EXPOSURE SIGNAL: DUTY = 1/4)

S2 LIGHT EMISSION SIGNAL

S2 EXPOSURE SIGNAL

DUTY = 1/3   DUTY = 1/4   DUTY = 1/5

DUTY = 1/3, 1/4, 1/5
OCCUR
AT SAME RATE

DUTY = 1/3   DUTY = 1/4   DUTY = 1/5

EP 3 379 291 A1

# FIG. 13

## INTERNATIONAL SEARCH REPORT

| International application No. |
|---|
| PCT/JP2016/004837 |

| A. CLASSIFICATION OF SUBJECT MATTER |
|---|
| *G01S17/10*(2006.01)i, *G01S7/487*(2006.01)i, *G01S17/89*(2006.01)i |

According to International Patent Classification (IPC) or to both national classification and IPC

| B. FIELDS SEARCHED |
|---|
| Minimum documentation searched (classification system followed by classification symbols)<br>G01S7/48-7/51, 17/00-17/95 |

| Documentation searched other than minimum documentation to the extent that such documents are included in the fields searched |
|---|
| Jitsuyo Shinan Koho          1922–1996   Jitsuyo Shinan Toroku Koho   1996–2017<br>Kokai Jitsuyo Shinan Koho    1971–2017   Toroku Jitsuyo Shinan Koho   1994–2017 |

| Electronic data base consulted during the international search (name of data base and, where practicable, search terms used) |
|---|
|  |

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2010-256291 A  (Toyota Motor Corp.),<br>11 November 2010 (11.11.2010),<br>paragraphs [0048] to [0126]; fig. 1 to 3<br>(Family: none) | 1-7,11<br>8-10<br>12 |
| X<br>Y | WO 2014/207992 A1  (Panasonic Intellectual<br>Property Management Co., Ltd.),<br>31 December 2014 (31.12.2014),<br>paragraphs [0028] to [0042]; fig. 2 to 4<br>& US 2016/0097841 A1<br>paragraphs [0054] to [0067]; fig. 2 to 4 | 12<br>8-10 |
| A | JP 2001-337166 A  (Minolta Co., Ltd.),<br>07 December 2001 (07.12.2001),<br>entire text; all drawings<br>& US 2001/0046317 A1<br>entire text; all drawings | 1-12 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>01 February 2017 (01.02.17) | Date of mailing of the international search report<br>14 February 2017 (14.02.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2016/004837 |

C (Continuation).   DOCUMENTS CONSIDERED TO BE RELEVANT

| Category* | Citation of document, with indication, where appropriate, of the relevant passages | Relevant to claim No. |
|---|---|---|
| A | US 2014/0362364 A1  (WALIGORSKI, Gregory M.), 11 December 2014 (11.12.2014), entire text; all drawings (Family: none) | 1-12 |
| A | JP 2013-076645 A  (Stanley Electric Co., Ltd.), 25 April 2013 (25.04.2013), entire text; all drawings (Family: none) | 1-12 |
| A | WO 2010/013779 A1  (National University Corporation Shizuoka University), 04 February 2010 (04.02.2010), entire text; all drawings & US 2011/0157354 A1 entire text; all drawings & JP 2010-32425 A      & EP 2322953 A1 & KR 10-2011-0044862 A | 1-12 |
| A | JP 2011-215073 A  (Hamamatsu Photonics Kabushiki Kaisha), 27 October 2011 (27.10.2011), entire text; all drawings (Family: none) | 1-12 |
| A | JP 2007-170856 A  (Denso Corp.), 05 July 2007 (05.07.2007), entire text; all drawings & US 2007/0146682 A1 entire text; all drawings | 1-12 |

Form PCT/ISA/210 (continuation of second sheet) (January 2015)

## REFERENCES CITED IN THE DESCRIPTION

### Patent documents cited in the description

- WO 2013538342 A